(19) Europäisches Patentamt
European Patent Office
Office européen des brevets

(11) **EP 2 740 587 A1**

(12) **EUROPÄISCHE PATENTANMELDUNG**

(43) Veröffentlichungstag:
**11.06.2014   Patentblatt 2014/24**

(21) Anmeldenummer: 13196408.2

(22) Anmeldetag: **10.12.2013**

(51) Int Cl.:
*B32B 1/08* (2006.01)     *B32B 7/12* (2006.01)
*B32B 27/08* (2006.01)     *B32B 27/30* (2006.01)
*B32B 27/32* (2006.01)     *B32B 27/34* (2006.01)
*F16L 55/165* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **10.12.2012   DE 102012112024**

(71) Anmelder: **Buergofol GmbH
93354 Siegenburg (DE)**

(72) Erfinder: **Boutrid, Abdel-Kader
93345 Siegenburg (DE)**

(74) Vertreter: **Schlief, Thomas P.
Patentanwälte
Canzler & Bergmeier
Friedrich-Ebert-Straße 84
85055 Ingolstadt (DE)**

(54) **Mehrschichtfolie**

(57)   Die Erfindung betrifft eine Mehrschichtfolie, vorzugsweise in Form einer Schlauchfolie, mit einer Schichtfolge aus mindestens den folgenden Schichten: mindestens eine Schicht (1) enthaltend mindestens ein Homo- und/oder Copolyamid, vorzugsweise als eine der Außenschichten, mindestens eine Haftvermittlerschicht (2), (4), und mindestens eine weitere Schicht (3), (5), vorzugsweise als eine der Außenschichten. Die erfindungsge- mäße Mehrschichtfolie zeichnet sich dadurch aus, dass in der mindestens einen Haftvermittlerschicht (2), (4) und/oder der mindestens einen weiteren Schicht (3), (5) mindestens ein Ethylen-(Meth)Acrylat-Copolymer, in funktionalisierter oder nicht-funktionalisierter Form, enthalten ist. Zudem werden Verwendungen einer solchen Mehrschichtfolie vorgestellt sowie ein Einlegeschlauch für die grabenlose Kanalsanierung, der eine solche Mehrschichtfolie umfasst.

EP 2 740 587 A1

**Beschreibung**

Die Erfindung betrifft eine Mehrschichtfolie, vorzugsweise in Form einer Schlauchfolie, mit einer Schichtfolge aus mindestens den folgenden Schichten: mindestens eine Schicht enthaltend mindestens ein Homo- und/oder Copolyamid, vorzugsweise als eine der Außenschichten, mindestens eine Haftvermittlerschicht, und mindestens eine weitere Schicht, vorzugsweise als eine der Außenschichten.

Der Anwendungsbereich von Folien mit einer Olefin-Homo- oder Copolymer-Schicht (beispielsweise eine Polyethylen (PE)-Schicht) sowie einer Polyamid (PA)-Schicht ist sehr groß. Zu den Einsatzgebieten gehört auch das Schlauchlining-Verfahren für die grabenlose Kanalrohrsanierung. Hier ist es beispielsweise beim System Glasfaser-Schlauchliner mit UV- oder Dampfhärtung bekannt, in das zu sanierende Rohr eine dickwandige Folie aus PE mit einer hohen Dichte (HDPE - High Density Polyethylene) als Gleitfolie einzubringen, welche - zumeist in der Querschnittsform eines Halbkreises - an der Innenwand des Rohres angelegt wird. Anschließend wird ein flexibler Einlegeschlauch in das Rohr eingezogen (Einzugsverfahren), wobei der Einlegeschlauch über die Gleitfolie gleitet. Hierdurch wird einerseits eine Beschädigung des Einlegeschlauchs durch die Rohrinnenwand bzw. Gegenstände im Rohr vermieden, andererseits ist die Reibung zwischen Einlegeschlauch und Gleitfolie sehr niedrig, was das Einziehen des Einlegeschlauchs erleichtert.

Ein derartiger Einlegeschlauch (auch Schlauchliner genannt) weist beim System Glasfaser-Schlauchliner mit UV- oder Dampfhärtung üblicherweise einen äußeren Schlauch (Schlauchaußenfolie) und einen inneren Schlauch (Schlauchinnenfolie) auf, zwischen denen ein Trägermaterial, beispielsweise Glasfasern, eingebracht ist, welches mit reaktivem Kunststoffharz getränkt ist. Als reaktives Kunststoffharz kommen zum Beispiel handelsübliche UP-Harze (Polyester- bzw. ungesättigte Polyesterharze), VE-Harze (Vinylesterharze) oder EP-Harze (Epoxid-Harze) zum Einsatz. Die Härtung der Harze erfolgt bei UP- oder VE-Harzen zum Beispiel mit Hilfe von Photoinitiatoren. Die Härtung kann aber auch thermisch erfolgen. Der Einlegeschlauch wird im Rohr durch gegen die mechanisch stabile Schlauchinnenfolie gerichtete Druckluft von innen her solange aufgeblasen, bis die Schlauchaußenfolie an der Rohrinnenwand bzw. der Gleitfolie anliegt, um anschließend das Harz - beispielsweise mittels UV-Licht aus einer langsam, durch das Innere des aufgeblasenen Einlegeschlauchs gezogenen UV-Lichtquelle - auszuhärten. Zum Schluss wird die Schlauchinnenfolie des Einlegeschlauchs abgezogen und entfernt. Die Schicht mit dem Trägermaterial ist dann den durch das Rohr zu leitenden Substanzen exponiert.

Um eine ungewollte, vorzeitige Aushärtung des Kunststoffharzes vor dem Einbringen in das zu sanierende Rohr zu verhindern (insbesondere bei der Lagerung), ist es notwendig, dass die Schlauchaußenfolie des Einlegeschlauchs eine Schutzschicht aufweist oder aus einer Schutzschicht besteht, die eine vorzeitige Einwirkung von UV-Strahlung oder kürzerwelliger Strahlung sichtbaren Lichts auf das Harz und damit eine vorzeitige Harzhärtung verhindert. Die Schlauchinnenfolie eines solchen Einlegeschlauchs muss dagegen eine sehr gute Durchlässigkeit gegenüber UV-Strahlung und kürzerwelliger Strahlung sichtbaren Lichts aufweisen. Damit wird der Aushärtungsvorgang ermöglicht, der beim im Rohr aufgeblasenen Schlauchliner durch eine UV-Strahlungsquelle vorgenommen wird, die an der Innenseite des Schlauchliners, also innerhalb der Schlauchinnenfolie, hindurchgezogen wird.

Bei der grabenlosen Kanalrohrsanierung kann beim System Synthesefaser-Schlauchliner mit Warmwasser oder Dampfhärtung auch ein weiterer Schlauch als sogenannter Preliner oder als Stütz- oder Kalibrierschlauch verwendet werden. Ein Preliner deckt den gesamten Umfang des zu sanierenden Rohres ab, liegt an diesem an und wird zeitlich entweder vor dem Einlegeschlauch in das Rohr eingebracht oder gleichzeitig. Der Einlegeschlauch wird entweder in den Preliner eingezogen (Einzugsverfahren) oder im bzw. mit dem Preliner inversiert (Inversionsverfahren, Umstülpverfahren).

Nachteilig bei der oben genannten, bisher als Schlauchinnenfolie verwendeten PE/PA- oder PE/HV/PA-Folie (HV: Haftvermittler) ist unter anderem deren geringe mechanische Festigkeit. Im schlimmsten Fall führen ungenügende mechanische Eigenschaften der Schlauchinnenfolie zu einem Platzen der Folie, wenn die als Schlauch ausgebildete Schlauchinnenfolie des Einlegeschlauchs (Schlauchliner) aufgeblasen wird.

Die Schlauchinnenfolien müssen daher bezüglich ihrer mechanischen Eigenschaften wie (Weiter-)Reißfestigkeit, Reißkraft, Dehnbarkeit, Spleißneigung, Schlagzähigkeit oder Durchstoßfestigkeit höchste Anforderungen erfüllen. Die bisher im Stand der Technik als Schlauchinnenfolien verwendeten PE/PA- oder PE/HV/PA-Folien sind diesbezüglich noch verbesserungswürdig, um noch mehr Sicherheit zu bieten.

Es ist Aufgabe der vorliegenden Erfindung, eine Mehrschichtfolie zur Verfügung zu stellen, welche den hohen Anforderungen hinsichtlich ihrer mechanischen Stabilität genügt. Weiterhin ist es Aufgabe der Erfindung, entsprechend Verwendungen einer solchen Mehrschichtfolie vorzuschlagen.

Diese Aufgabe wird durch die Mehrschichtfolie gemäß Anspruch 1 gelöst.

In der erfindungsgemäßen Mehrschichtfolie ist in mindestens einer Haftvermittlerschicht und/oder einer weiteren Schicht mindestens ein Ethylen-(Meth)Acrylat-Copolymer enthalten, das funktionalisiert (auch "modifiziert" genannt) sein kann. Dessen Gew.-% -Anteil des mindestens einen Ethylen-(Meth)Acrylat-Copolymer kann in der mindestens einen Schicht im Bereich zwischen 0,1 und 100% liegen. Das mindestens eine Ethylen-(Meth)Acrylat-Copolymer kann ein Ethylen-Methylacrylat (EMA-Copolymer), Ethylen-Ethylacrylat (EEA-Copolymer), Ethylen-Butylacrylat (EBA-Copolymer) oder Ethylen-2-Ethyl-Hexylacrylat (Ethylen-2-EHA-Copolymer) sein.

Die genannten Copolymere haben eine hohe Schlagfestigkeit, eine hohe Hitzebeständigkeit und auch bei niedrigen Temperaturen eine hohe Flexibilität.

Die Bezeichnung (Meth)Acrylat gilt für Monomere bzw. durch Polymerisation daraus hergestellte Polymere umfassend oder basierend auf Acrylsäureester oder Methacrylsäureester. Mit anderen Worten steht die Bezeichnung "Ethylen-(Meth)Acrylat-Copolymer" sowohl für Ethylen-Acrylat-Copolymere als auch für Ethylen-Methacrylat-Copolymere.

Ethylen-(Meth)Acrylat-Copolymere im Sinne dieser Erfindung sind alle Copolymere, die durch (Co-)Polymerisation von Ethylen ($H_2C = CH_2$) mit Estern der Acryl- oder der Methacrylsäure gebildet werden. Dabei kann die Veresterung der Acryl- oder der Methacrylsäure mit allen üblichen Alkoholen der allgemeinen Strukturformel R-OH geschehen (R = z.B. gesättigter oder ungesättigter, verzweigter oder unverzweigter, aliphatischer oder aromatischer Kohlenwasserstoff mit 1 bis 60 C-Atomen). Die chemische Strukturformel der Acrylsäure ist $H_2C = CH$-COOH, die chemische Strukturformel der Methacrylsäure ist $H_2C = C(CH_3)$-COOH. Beispiele für Alkohole sind Methanol, Ethanol, Propanol, iso-Propanol, Butanol, Iso-Butanol, Pentanol, Hexanol, 2-Ethyl-Hexanol, Heptanol, Oktanol, Dekanol, Dodekanol etc.

Allerdings ist das mindestens eine Ethylen-(Meth)Acrylat-Copolymer bevorzugt kein Ionomer, weist demnach vorzugsweise keine über Ionenbindungen vernetzten Kettenmoleküle auf.

Werden neben Ethylen und (Meth)Acrylaten noch ein oder zwei weitere Monomere mit polymerisiert, ergeben sich Terpolymere (aus 3 Monomeren) bzw. Quaterpolymere (aus 4 Monomeren). Eine solche zusätzliche Polymerisation des Ethylen-(Meth)Acrylat-Copolymers fällt entsprechend der vorliegenden Terminologie ebenfalls unter den Begriff "Funktionalisierung" bzw. Modifizierung des Ethylen-(Meth)Acrylat-Copolymers. In diesem Fall können zum Beispiel eine oder mehrere chemische Funktionen in das Polymer eingebracht werden. So werden Ethylen-(Meth)Acrylat-Polymere mit Carbonsäuregruppen erhalten, wenn das weitere Monomer Acryl- oder Methacrylsäure ist. Ethylen-(Meth)Acrylat-Polymere mit Hydroxylgruppen bilden sich z.B. mit Hydroxyethylacrylat als weiterem Monomer. Ethylen-(Meth)AcrylatPolymere können aber auch durch Pfropfung mit weiteren chemischen Funktionen versehen werden. Üblich ist zum Beispiel die Pfropfung mit Maleinsäureanhydrid (MSA), was Säureanhydrid-Gruppen in das Polymer einträgt.

Polymere auf Basis Ethylen und (Meth)Acrylat, die zusätzlich drei oder mehr weitere Monomere enthalten, sind zwar ebenfalls möglich, doch haben diese industriell nur eine untergeordnete Bedeutung.

Die Vorteile der Erfindung sind insbesondere darin zu sehen, dass die erfindungsgemäßen Folien hervorragende mechanische Eigenschaften wie sehr hohe Dehnbarkeit, geringe Spleißneigung, Robustheit, Widerstandsfähigkeit, Durchstoßfestigkeit sowie eine sehr hohe Transmission im Wellenlängenbereich von 300 bis 500 nm aufweisen. Ein Platzen der Folien ist damit praktisch ausgeschlossen.

Im Speziellen stellte es sich heraus, dass sich die erfindungsgemäßen Mehrschichtfolien durch hervorragende mechanische Werte auszeichnen, insbesondere durch eine sehr gute Dehnfähigkeit (bestimmt nach der unten beschriebenen Aufblastestmethode), ohne dass eine Schicht spleißt. Vorzugsweise weist die erfindungsgemäße Mehrschichtfolie eine Dehnbarkeit bis zum "Spleiß", d.h. einem ersten Abriss einer innenliegenden Folienschicht, von mindestens 20%, besonders bevorzugt von mindestens 25%, ganz besonders bevorzugt von mindestens 30% auf. Die Dehnbarkeit bis zum Platzen beträgt vorzugsweise mindestens 100%, bevorzugt mindestens 110%, besonders bevorzugt mindestens 120%, und am meisten bevorzugt mindestens 130% und sogar mindestens 140%.

Eine wichtige Größe im Zusammenhang mit der Dehnfähigkeit ist der sog. "Yield-Point", d.h. die Streckgrenze. Bis zu diesem Punkt nimmt die Kraft mit der Dehnung zu. Ist der Yield-Punkt überschritten, beginnt die Folie zu fließen, die Kraft nimmt mit zunehmender Dehnung wieder ab oder bleibt zumindest konstant.

Ein geeignetes Ethylen-(Meth)Acrylat ist z.B. Lucofin 1494H der deutschen Firma Lucobit AG, das ein chemisch modifiziertes Polyethylen in Form von EBA (Ethylen-Butylacrylat) ist, das mit Maleinsäureanhydrid (MSA) gepfropft ist. Im Rahmen dieser Erfindung wird es bevorzugt in einer Haftvermittlerschicht eingesetzt. Ein anderes geeignetes Ethylen-(Meth)Acrylat ist Lucofin 1400HN Puder, das ein polares Copolymer aus Ethylen und Butylacrylat mit niedriger Kristallinität ist. Aufgrund seiner chemischen Struktur ist Lucofin 1400HN Puder weicher und flexibler als Ethylenhomopolymere mit vergleichbarer Dichte.

Auch sind Harze des Markennamens Lotader der französischen Firma Arkema, insbesondere Lotader MAH (Maleinsäureanhydrid) und Lotader GMA (Glycidyl-Methacrylat), verwendbar, welche Terpolymere sind.

Von DuPont sind geeignete Ethylen-(Meth)Acrylat die unter dem Markennamen Elvaloy AC vertriebenen Copolymer-Harze. Ethylen-Butylacrylate (EBA Copolymere) sind beispielsweise Elvaloy AC 3117, Elvaloy AC 3217, Elvaloy AC 3427 und Elvaloy AC 3717. Ethylen-Ethylacrylate (EEA Copolymere) sind beispielsweise Elvaloy AC 2112, Elvaloy AC 2116, Elvaloy AC 2618 und Elvaloy AC 2615. Ethylen-Methylacrylate (EMA Copolymere) sind beispielsweise Elvaloy AC 1125, Elvaloy AC 1209, Elvaloy AC 1218 und Elvaloy AC 1224, Elvaloy AC 1330, Elvaloy AC 1609, Elvaloy AC 1820, Elvaloy AC 1913, Elvaloy AC 12024S und Elvaloy AC 15024S.

Von BASF sind verschiedene geeignete Ethylen-(Meth)Acrylat unter dem Markennamen Lucalen erhältlich, beispielsweise Lucalen A 2710 H, Lucalen A 2910 M, Lucalen A 2910 MQ 47, Lucalen A 2920 M, Lucalen A 2920 M Q 225H, Lucalen A 3110 M, Lucalen A 3110 M Q 244, Lucalen A 3110 M Q 270 and Lucalen A 3120 M.

Wie schon bei einigen der o.g. kommerziell erhältlichen Ethylen-(Meth)Acrylat-Copolymeren angeführt, ist anstelle der oder zusätzlich zur Pfropfung mit Maleinsäureanhydrid (MSA bzw. MAH) eine Funktionalisierung bzw. Modifizierung der Ethylen-(Meth)Acrylat-Copolymere durch Copolymerisation mit (Meth)Acrylsäure oder Glycidyl-Methacrylat oder Hydroxyethylacrylat möglich. Hierdurch werden z.B. Terpolymere oder Quaterpolymere erhalten.

Eine weitere mögliche Modifikation der erfindungsgemäßen Mehrschichtfolie stellt das Bepudern dar.

Besonders bevorzugt enthält teilweise oder sogar überwiegend bis ausschließlich mindestens eine Haftvermittlerschicht und/oder eine weitere Schicht (wobei beide üblicherweise bei Schlauchinnenfolien zur grabenlosen Kanalsanierung mindestens ein thermoplastisches Olefin-Homo- oder Copolymer enthalten, häufig sogar überwiegend) das besagte mindestens eine Ethylen-(Meth)Acrylat-Copolymer. Der Anteil an dem mindestens einen Ethylen-(Meth)Acrylat-Copolymer kann in der entsprechenden Schicht oder den Schichten vorzugsweise mehr als 30 Gew.-%, vorzugsweise mehr als 75 Gew.-% und bis zu 100 Gew.-% betragen. Mischungen in den jeweiligen Schichten mit herkömmlichen Haftvermittlern bzw. thermoplastischen Olefin-Homo- oder Copolymeren (oder anderen Substanzen) sind ohne Weiteres möglich.

Die erfindungsgemäße Mehrschichtfolie kann insbesondere für einen Einsatz als Schlauchinnenfolie bei der Kanalsanierung einen Schichtaufbau mit drei, vier, fünf oder mehr Schichten aufweisen. Es können hierbei eine dreischichtige, eine vierschichtige, eine fünfschichtige oder noch höherschichtige Schlauchinnenfolie zum Einsatz kommen, wobei erfindungsgemäß in mindestens einer der Schichten - außer der oder den Schichten, die auf einem ein Homo- und/oder Copolyamid basieren oder ein solches enthalten - mindestens ein Ethylen-(Meth)Acrylat-Copolymer enthalten ist.

Eine erfindungsgemäße dreischichtige Folie kann beispielsweise eine Schichtfolge PE/HV/PA aufweisen, eine fünfschichtige Folie beispielsweise eine Schichtfolge PE/HV/PA/HV/PE, PA/HV/PE/HV/PE oder PA/HV/PE/ PE/PE oder PA/HV/PA/HV/PE, eine siebenschichtige Folie beispielsweise eine Schichtfolge PE/PE/HV/PA/HV/PE/PE, PA/HV/PE/PE/PE/PE/PE oder PA/HV/PA/HV/PE/PE/PE oder PA/HV/PA/HV/PA/HV/PE. In einer oder mehreren der PE- und/oder HV-Schichten ist erfindungsgemäß mindestens ein Ethylen-(Meth)Acrylat-Copolymer enthalten, in einigen Ausführungsformen sogar ausschließlich (wobei in diesen Fällen die Abkürzungen PE bzw. HV nicht auf die Inhaltsstoffe bezogen sind, der Einfachheit aber beibehalten werden).

Der oder die PA-Schichten können aus gleichem oder verschiedenem PA-Material bestehen. Auch PA-Mischungen sind bevorzugt. Weitere Details sind weiter unten ausgeführt. Sind zwei PA-Schichten vorhanden, kann ein Haftvermittler eingebracht werden. Es kann aber auch ohne Haftvermittler gearbeitet werden. Bevorzugt ist der Einsatz von (üblichen) Haftvermittlern zwischen zwei PA-Schichten.

Wie schon oben erwähnt wurde überraschend herausgefunden, dass sich die erfindungsgemäße Mehrschichtfolie, sei es in Form einer mehrschichtigen Schlauchfolie (d.h. eine durch (Co)-Extrusion, vorzugsweise durch Blasfolien-(Co)-Extrusion, hergestellte Mehrschichtfolie ohne Siegelnaht) oder einer zu einem Schlauch gesiegelten Mehrschichtfolie, durch sehr gute mechanische Eigenschaften, insbesondere durch eine sehr gute Dehnbarkeit, auszeichnet. Bei der Sanierung von unterirdischen Rohren kann sie somit als Schlauchinnenfolie den auftretenden Belastungen, insbesondere beim Aufblasen im Rohrsystem, hervorragend standhalten. Das gilt auch bei den mechanischen Belastungen, denen die Folie beim Transport ausgesetzt ist. Des Weiteren wurde festgestellt, dass die als Schlauchinnenfolie eingesetzte Mehrschichtfolie hinreichend reißfest ist, wenn sie nach Aushärtung des Harzes vom Harz/Trägersystem abgezogen wird. So kann die Schlauchinnenfolie rückstandslos abgezogen werden und es bleiben keine Folienbruchstücke im sanierten Kanal. Zudem weist die erfindungsgemäße Mehrschichtfolie, wenn sie als Schlauchinnenfolie eingesetzt wird, eine gute Barrierewirkung gegen das Austrocknen des besagten Harzes auf.

Die Nummerierung der Schichten in den beanspruchten Schichtfolgen, d.h. Schicht (1), Schicht (2), ..., verdeutlicht die Reihenfolge der verschiedenen Schichten. Zwischen diesen einzelnen Schichten, beispielsweise der Schicht (1) und der Schicht (2), können dabei eine oder mehrere zusätzliche Schichten vorgesehen sein.

Zur Herstellung der Schicht (1) der erfindungsgemäßen Mehrschichtfolie gemäß Anspruch 1 eignet sich mindestens ein Homo- und/oder Copolyamid. Geeignete Homo- oder Copolyamide sind vorzugsweise ausgewählt aus der Gruppe thermoplastische aliphatische, teilaromatische oder aromatische Homo- oder Copolyamide. Diese Homo- oder Copolyamide können aus Diaminen (z.B. aliphatische Diamine mit 2-10 Kohlenstoffatomen, insbesondere Hexamethylendiamin, und/oder aromatische Diamine mit 6-10 Kohlenstoffatomen, insbesondere p-Phenylendiamin) und/oder aus aliphatischen Dicarbonsäuren und/oder aromatischen Dicarbonsäuren mit 6-14 Kohlenstoffatomen (z.B. Adipinsäure, Terephthalsäure oder Isoterephthalsäure) und/oder aus Lactamen mit 4-10 Kohlenstoffatomen (z.B. aus ε-Caprolactam) hergestellt werden.

Vorzugsweise werden PA 6; PA 11; PA 12; PA 66; PA 6, 10; PA 6, 12; PA 666, PA 6I, PA 6T oder entsprechende Co-Polymere oder Mischungen aus mindestens zwei der genannten Polyamide verwendet.

Die Schicht (1) der erfindungsgemäßen Mehrschichtfolie weist eine Schichtdicke von 5 $\mu$m bis 100 $\mu$m, besonders bevorzugt von 20 $\mu$m bis 90 $\mu$m, auf.

Zur Herstellung der Haftvermittlerschichten (2) und/oder (4) der erfindungsgemäßen Mehrschichtfolie gemäß Anspruch 1 - mit oder ohne den erfindungsgemäßen Einsatz mindestens eines Ethylen-(Meth)Acrylat-Copolymers in diesen Schichten (2) und/oder (4) - können übliche Haftvermittler eingesetzt werden, es sei denn, dass die Schichten (2) und/oder (4) ausschließlich aus mindestens einem Ethylen-(Meth)Acrylat-Copolymer bestehen. Wenn ein modifiziertes thermoplastisches Polymer für die Haftvermittlerschichten (2) und/oder (4) eingesetzt wird, können insbesondere dieselben Olefin-Homo- oder Copolymere wie für die weiteren ersten und zweiten Schichten (3; 5) (s. unten) verwendet werden, allerdings mit geeigneter Modifizierung. Vorzugsweise wird demnach mindestens ein modifiziertes Olefin-Homo- oder Copolymer verwendet, wobei die Modifizierung vorzugsweise mit mindestens einer organischen Säure oder mindestens einem vorzugsweise zyklischen organischen Säureanhydrid, vorzugsweise mit Maleinsäureanhydrid, erfolgt.

Die Schichtdicke der Haftvermittlerschichten (2) und/oder (4) der erfindungsgemäßen Mehrschichtfolie liegt vorzugsweise zwischen 1 μm bis 30 μm, besonders bevorzugt zwischen 2 μm bis 20 μm.

Zur Herstellung der Schichten (3) und/oder (5) der erfindungsgemäßen Mehrschichtfolie gemäß Anspruch 1 bzw. Anspruch 10 kann - wenn die entsprechende Schicht nicht aus 100% Ethylen-(Meth)Acrylat-Copolymer besteht-mindestens ein thermoplastisches Olefin-Homo- oder Copolymer eingesetzt werden, beispielsweise solche von α,β-ungesättigten Olefinen mit 2-10 Kohlenstoffatomen. Es eignen sich hierbei vorzugsweise Ethylen-Homopolymere (Polyethylene, PE), vorzugsweise LDPE (Polyethylen hoher Dichte im Bereich von 0,86-0,93 g/cm$^3$), LLDPE (Linear Low Density Polyethylene), HDPE (Polyethylen hoher Dichte im Bereich von 0,94 und 0,97 g/cm$^3$) und mPE (auf Basis von Metallocen-Katalysatoren polymerisierte PE), Propylen-Homopolymere (Polypropylene, PP), Butylen-Homopolymere (Polybutylene, PB) und Isobutylen-Homopolymere (Polyisobutylene, PI) oder Mischungen aus mindestens zwei der genannten Polymere.

Die Schichtdicke der Schichten (3) und/oder (5) der erfindungsgemäßen Mehrschichtfolie beträgt vorzugsweise 10 μm bis 500 μm, besonders bevorzugt von 20 μm bis 400 μm, ganz besonders bevorzugt von 30 μm bis 300 μm.

Die Schichtdicke der einzelnen Schichten (3) und/oder (5) der erfindungsgemäßen Mehrschichtfolie beläuft sich auf mindestens 15% der Gesamtschichtdicke der Mehrschichtfolie, vorzugsweise auf mindestens 25% und besonders bevorzugt von 30% bis 60%.

Einzelne oder alle Schichten der erfindungsgemäßen Mehrschichtfolie können, wenn vorteilhaft oder notwendig, jeweils unabhängig voneinander Zusatzstoffe enthalten. Diese können ausgewählt sein aus der Gruppe umfassend Antistatika, Antioxidantien, Oxygen Scavenger, Antiblockmittel, Antifogmittel, antimikrobielle Wirkstoffe, Farbstoffe, Farbpigmente, Stabilisierungsmittel, vorzugsweise Hitze-Stabilisatoren, Prozess-Stabilisatoren, Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, UV-Stabilisatoren, und Dispergiermittel. Der Anteil an Zusatzstoffen in den Schichten kann mindestens 0,01-20 Gew.-%, vorzugsweise mindestens 0,1-10 Gew.-% (jeweils bezogen auf das Gesamtgewicht einer einzelnen Schicht) betragen.

Die Gesamtschichtdicke der erfindungsgemäßen Mehrschichtfolie liegt vorzugsweise zwischen 20 bis 2000 μm, besonders bevorzugt zwischen 50 bis 1500 μm, ganz besonders bevorzugt zwischen 70 bis 1000 μm, insbesondere zwischen 80 bis 400 μm.

Um die erfindungsgemäße Mehrschichtfolie vorteilhafterweise als Innenschlauchfolie bei der Rohrsanierung zu verwenden (s.o.), ist sie vorteilhafterweise zumindest teilweise für UV-Strahlung, d.h. elektromagnetische Strahlung in einem Wellenlängenbereich von 200 bis 400 nm, durchlässig, vorzugsweise zu mindestens 80% und besonders bevorzugt zu mindestens 90%. Eine UV-Quelle kann dann durch die erfindungsgemäße Mehrschichtfolie hindurch effektiv auf das vorzugsweise mit reaktivem Harz getränkte Trägermaterial einwirken, um es auszuhärten.

In einer bevorzugten Ausführungsform ist die erfindungsgemäße Mehrschichtfolie nicht nur zumindest teilweise durchlässig für UV-Strahlung, sondern - aus dem gleichen Grund wie oben - zudem zumindest teilweise durchlässig für kurzwelliges, sichtbares Licht (d.h. elektromagnetische Strahlung in einem Wellenlängenbereich von 400 bis 500 nm, vorzugsweise von 400 bis 450 nm), vorzugsweise zu mindestens 80%, besonders bevorzugt zu mindestens 90%.

Die erfindungsgemäße Mehrschichtfolie kann als Schlauchfolie durch (Co)-Extrusion, besonders bevorzugt durch Blasfolien-(Co)-Extrusion, hergestellt werden, vorzugsweise ohne Siegelnaht. Alternativ kann die erfindungsgemäße Mehrschichtfolie in Form einer Schlauchfolie als Cast-Folie durch Cast-(Co)-Extrusion erhalten werden oder als sonstige Flachfolie. Solche Folien können dann zu einem Schlauch versiegelt werden. Eine Prägung, Reckung, Konditionierung (reversible Aufnahme von Feuchtigkeit, vorzugsweise von Wasser, durch ein thermoplastisches Kunststoffmaterial wie Homo- oder Copolyamid oder der gesamten Mehrschichtfolie) und/oder Bedruckung der erfindungsgemäßen Mehrschichtfolie kann vorteilhaft sein. Hingegen ist die erfindungsgemäße Mehrschichtfolie vorzugsweise nicht orientiert. Bevorzugt ist die erfindungsgemäße Mehrschichtfolie transparent.

Entsprechend dem zuvor Erwähnten ist ein weiterer Gegenstand der vorliegenden Erfindung die Verwendung der erfindungsgemäßen Mehrschichtfolie, vorzugsweise in Form einer Schlauchfolie, als innenliegender Schlauch (Schlauchinnenfolie) eines Einlegeschlauchs zur Sanierung von unterirdischen Rohren, vorzugsweise von unterirdischen Kanalrohren. Dabei erlaubt die erfindungsgemäße Mehrschichtfolie, vorzugsweise in Form einer Schlauchfolie, aufgrund ihrer zumindest teilweisen Durchlässigkeit für UV-Strahlung die Aushärtung eines reaktiven Kunststoffharzes oder eines

**EP 2 740 587 A1**

mit reaktivem Kunststoffharz getränkten Trägermaterials, das sich zwischen einem außenliegenden ein- oder mehrschichtigen Schlauch (Schlauchaußenfolie) und dem erfindungsgemäß ausgestaltetem innenliegenden Schlauch (Schlauchinnenfolie) befindet.

Wenn in mindestens einer der Haftvermittlerschichten der Schlauchinnenfolie mindestens ein Ethylen-(Meth)Acrylat-Copolymer vorhanden ist, ist dieses bevorzugt funktionalisiert, beispielsweise mit Maleinsäureanhydrid.

Als Trägermaterial werden bevorzugt Glasfasergewebe, Synthesefaserfilze (wie z.B. Nadelfilze), Vliese und/oder Nonwoven-Textilfabrikate oder Textilien (wie z.B. Strickschläuche) verwendet, die jeweils mit mindestens einem reaktiven Kunststoffharz, vorzugsweise jeweils mit mindestens einem ungesättigten Polyesterharz (UP-Harz) und $\alpha,\beta$-ungesättigten Monomeren, wie z. B. Styrol, getränkt sind. Ein entsprechendes Beispiel sind glasfaserverstärkte Kunststoffe (GFK). Als weitere Harze kommen neben den UP-Harzen auch EP- und VE-Harze in Frage.

Die Erfindung betrifft ebenfalls einen Einlegeschlauch zum Einbringen in ein unterirdisches Rohr, insbesondere ein Kanalrohr, zu dessen Sanierung. Der Einlegeschlauch umfasst eine erfindungsgemäße flüssigkeitsdichte Mehrschichtfolie gemäß Anspruch 1 als innenliegenden Schlauch (Schlauchinnenfolie, vorzugsweise in Form einer Schlauchfolie) und eine flüssigkeitsdichte außenliegende Schlauchfolie (Schlauchaußenfolie), die zur Rohrwandung weist. Zwischen innen- und außenliegendem Schlauch ist ein durch UV-Strahlung aushärtbares Trägermaterial, vorzugsweise Glasfasermaterial, vorgesehen, das vorzugsweise mit einem reaktiven, ungesättigten Harz getränkt ist. Aus diesem getränkten Trägermaterial wird nach der Aushärtung das sanierte Kanalrohr gebildet. Nach der Aushärtung wird die erfindungsgemäße innenliegende Mehrschichtfolie bevorzugt vom mit Trägermaterial ausgekleideten Kanalrohr ab- und herausgezogen. Alternativ verbleibt die Schlauchinnenfolie im sanierten Rohr. Die Herstellung solcher Einlegeschläuche ist in der WO 2007/054350 A1 oder der EP 1 155 256 B1 beschrieben. Die mindestens ein Homo- und/oder Copolyamid enthaltende Schicht (1) der erfindungsgemäßen Mehrschichtfolie ist bevorzugt zum Harz gerichtet, während die anderen Schichten (2) - (4) - falls alle vorhanden-zum Rohrinneren gerichtet sind.

Die außenliegende Schlauchfolie kann ein- oder mehrschichtig sein. Vorzugsweise absorbiert und/oder reflektiert sie UV-Strahlung und/oder kurzwelliges, sichtbares Licht. Die außenliegende Schlauchfolie kann dabei entweder blickdicht oder zumindest kontakttransparent sein.

Vorzugsweise ist die als außenliegender Schlauch eingesetzte ein- oder mehrschichtige Schlauchfolie eines Einlegeschlauches (umfassend die innenliegende Mehrschichtfolie gemäß Anspruch 1, das auszuhärtende Harz sowie den außenliegenden Schlauch) eine zumindest kontakttransparente, UV-Strahlung und/oder kurzwelliges, sichtbares Licht absorbierende und/oder reflektierende Schlauchfolie. Ein solcher außenliegender Schlauch ist in der WO 2010/075946 A1 sowie der DE 10 2010 023 764 A1 beschrieben, wobei dieser außenliegende Schlauch vorzugsweise die dort beschriebenen Inhaltsstoffe und Eigenschaften aufweist, vorzugsweise einschließlich der ebenfalls dort beschriebenen Sauerstoffbarriereschicht, Wasserdampfbarriereschicht oder Ölbarriereschicht (vorzugsweise ein Homo- und/oder Copolyamid enthaltend).

Die erfindungsgemäße Mehrschichtfolie kann nicht nur für die Kanalsanierung mittels der beschriebenen UV-Härtung bzw. Härtung mit kurzwelligem sichtbarem Licht eingesetzt werden, sondern auch in Rohrsanierungssystemen, in denen der Einlegeschlauch (die erfindungsgemäße Mehrschichtfolie umfassend) thermisch gehärtet wird oder auch das Inversionsverfahren angewendet wird. Auch kann die erfindungsgemäße Mehrschichtfolie in Form eines Preliners oder einer Stütz- und/oder Kalibrierfolie eingesetzt werden.

Als Preliner ist im Sinne dieser Erfindung eine Folie, vorzugsweise in Form eines Folienschlauchs oder zu einem Schlauch gesiegelte Flachfolie, zu verstehen, die zwischen der Kanalwand des zu sanierenden Kanals und dem Schlauchliner eingebracht wird. Dabei erfüllt die Folie als Preliner eine Reihe von Aufgaben, wie zum Beispiel die Verhinderung der Verklebung des Harzes mit der Kanalwand sowie beispielsweise die Vermeidung des Kontakts mit Schmutz und Wasser zu dem noch nicht gehärteten Harz. Ferner verhindert die Preliner-Folie auch das Austreten von Harz aus dem Kanalsanierungssystem sowie die Kontamination von Erdreich und Grundwasser. Durch die Preliner-Folie werden außerdem die Zuläufe vor eindringendem Überschuss-Harz geschützt, so dass sich keine Harzpropfen und Verstopfungen bilden können.

Die Verwendung der erfindungsgemäßen Mehrschichtfolie als Preliner ist auch ähnlich einer Funktion als Gleitfolie für den einzuziehenden Schlauchliner. Eine erfindungsgemäße Verwendung der beschriebenen Mehrschichtfolie betrifft daher auch eine Verwendung als schlauchförmige Gleitfolie beim Schlauchlining-Verfahren im Wege der grabenlosen Kanalsanierung. In diesem Fall kommt es auf niedrige Reibungskoeffizienten zwischen der Gleitfolie und der Außenfolie des Schlauchliners an.

Ein Kalibrierschlauch entspricht in seiner Funktion im Wesentlichen der Schlauchinnenfolie beim System UV-/Licht-härtender Glasfaserliner und ist bei einem Schlauchliner auch ebenso angeordnet wie die Schlauchinnenfolie. Oft ist ein Kalibrierschlauch an seiner Schlauchaußenseite (also beim Einsatz hin zur Kanalwand) mit einem Vlies oder Filz verbunden. Wenn ein Kalibrierschlauch verwendet wird, kann auf eine Schlauchinnenfolie verzichtet werden. Hierbei kann beim Einsatz der erfindungsgemäßen Folie als Kalibrierschlauch auch auf beiden Seiten Harz aufgetragen sein. Vorzugsweise wird das Harz in Form eines mit Harz getränkten Trägers, beispielsweise Glasfasern oder Synthesefaserfilze, mit der Folie in Kontakt gebracht. Die aktivierbare(n) Schicht(en) der erfindungsgemäßen Folie verbindet (verbinden) sich dann mit dem Harz oder mit einem harzgetränkten Trägermaterial (wie Vlies, Filz, oder Textil etc.). Erhalten wird somit ein "Rohr-im-Rohr"-System.

Neben der Verwendung als Schlauchinnenfolie für Schlauchliner oder andere Folien bei der grabenlosen Kanalsanierung kann die erfindungsgemäße Mehrschichtfolie auch als Folie zur Verpackung von Lebensmittel (sog. Food-Bereich) und Nicht-Lebensmittel (sog. Non-Food-Bereich) eingesetzt werden, beispielsweise als Deckel- und Bodenfolie, Schrumpffolie und Skinfolie. Auch die Verwendung der erfindungsgemäßen Mehrschichtfolien zur Herstellung von Beuteln oder als Folie für Bag-in-Boxen ist möglich. Im Bereich der Lebensmittelverpackungen ist es bevorzugt, wenn sowohl in der mindestens einen Haftvermittlerschicht als auch in der mindestens einen weiteren Schicht mindestens ein Ethylen-(Meth)Acrylat-Copolymer, in funktionalisierter oder nicht-funktionalisierter Form, enthalten ist.

Nicht zuletzt kann die erfindungsgemäße Mehrschichtfolie als Schutzfolie, z.B. Oberflächenschutzfolie und Schutzfolie für Schutzanzüge Einsatz finden. Gleiches gilt für die Verwendung als Abdeckfolie oder Agrarfolie. Weitere Anwendungen bzw. Verwendungen sind ohne Weiteres möglich.

Bestimmung der Dehnbarkeit

Zur Bestimmung der Dehnbarkeit eines Vergleichsbeispiels sowie verschiedener erfindungsgemäßer Mehrschichtfolien in Form von Schlauchfolien wurden Aufblastests durchgeführt. Im Falle einer Mehrschichtfolie, die nicht als Schlauchfolie vorliegt, sondern z.B. als Flachfolie, wird diese zu einem Schlauch versiegelt, um anschließend dessen Dehnbarkeit zu bestimmen. Die Versuche im Rahmen der Erfindung wurden an Schlauchfolien durchgeführt.

Zur Vorbereitung wird eine 5 m lange Schlauchfolie, die einen Schlauchumfang von 1175 mm bis 1180 mm aufweist, an beiden Enden durch zwei Metallscheiben (sog. Packer) mit einem geeigneten Durchmesser luftdicht verschlossen. Um die Luftdichtigkeit zu erreichen, wurden - wie es gängige Praxis bei solchen Aufblastests ist - Spanngurte und handelsübliches Gewebeklebeband verwendet. Durch ein Ventil in einem der beiden Packer wird Druckluft in die Schlauchfolie geleitet, bis diese platzt. Vor dem Platzen sind Schichtabrisse von innenliegenden Folienschichten erkennbar, die als "Spleiß" (auch: splice) bezeichnet werden. Hieraus bildet sich eine nur lokal auftretende Blase in der Mehrschichtfolie, welche dann bei weiterem Aufblasen zu einem Folienriss und einem Platzen der Schlauchfolie führt. Die maximale Dehnung (Angabe in Prozent) wird ermittelt, indem der bis zum Platzen erzielte Außenumfang der Schlauchfolie an ihrer größten Stelle gemessen und mit dem anfänglichen Schlauchdurchmesser verglichen wird, wobei folgende Formel verwendet wird:

$$\textit{Maximale Dehnbarkeit} = [(\textit{Schlauchdurchmesser nach Aufblasen / anfänglicher Schlauchdurchmesser vor dem Aufblasen}) - 1] \cdot 100$$

Die gleiche Formel gilt für den "Folienspleiß", d.h. dem ersten bemerkbaren Abriss einer Schicht der Schlauchfolie (ohne dass der gesamte Schlauch davon betroffen ist):

$$\textit{„Spleiß"} = [(\textit{Schlauchdurchmesser nach Aufblasen und erstem erkennbaren Schichtabriss / anfänglicher Schlauchdurchmesser vor dem Aufblasen}) - 1] \cdot 100$$

Ausführungsbeispiele:

Die nachfolgenden Beispiele und Vergleichsbeispiele dienen der Erläuterung der Erfindung und sind nicht einschränkend auszulegen.

I. Chemische Charakterisierung der eingesetzten Rohstoffe

Als Polyamide (PA) für die Schicht (1) sind einsetzbar handelsübliche Polyamide (jeweilige Markennamen in Klammern) der Firmen BASF (Ultramid), Lanxess (Durethan), DuPont (Zytel), DSM Engineering Plastics (Akulon, Stanyl), EMS-Chemie (Grilamid, Grivory, Grilon), Evonik (Vestamid, Trogamid), Radici (Radilon, Radiflam, Raditer, Heraform, Heraflex) Rhodia (Technyl, Stabamid), UBE, DSM (Novamid), Atofina (Rilsan). Bei den im Folgenden vorgestellten Beispielen wird als Polyamid-Schicht stets eine Mischung aus 12% Durethan B40 FAM (Lanxess) und 88% Durethan C38 F (Lanxess) verwendet.

Ein typischer einsetzbarer Haftvermittler ist beispielsweise Admer NF 498 E, das ein mit Maleinsäureanhydridgruppen modifiziertes LDPE der Firma Mitsui ist.

Typische einsetzbare Polyolefine sind beispielsweise Lupolen 2420 F, das ein LDPE der Firma LyondellBasell Polymers ist, und Exceed 1327 CA der Firma ExxonMobil Chemical Company, das ein mittels Metallocen-Katalyse hergestelltes Ethylen-Copolymer ist, bei dessen Polymerisation neben Ethylen als weiteres Co-Monomer Hexen eingesetzt wird.

Als ein Ethylen-(Meth)Acrylat wurde Lucofin 1494H der deutschen Firma Lucobit AG eingesetzt, das ein chemisch modifiziertes Polyethylen in Form von EBA (Ethylen-Butylacrylat) gepfropft mit Maleinsäureanhydrid (MSA) ist. Vorliegend wurde es Haftvermittlerschichten von erfindungsgemäßen Mehrschichtfolien eingesetzt. Zudem fand Lucofin 1400HN Puder Einsatz, das ein polares Copolymer aus Ethylen und Butylacrylat mit niedriger Kristallinität ist. Aufgrund seiner chemischen Struktur ist Lucofin 1400HN Puder weicher und flexibler als Ethylenhomopolymere mit vergleichbarer Dichte. Lucofin 1400HN Puder wird als ungefärbtes und nicht additiviertes Pulver in Naturfarbe geliefert. Andere einsetzbare Ethylen-(Meth)Acrylat-Copolymere wurden schon weiter oben aufgelistet. Die beiden Substanzen, Lucofin 1494H und Lucofin 1400HN Puder, sind in den nachfolgenden Tabellen in fetter Schrift wiedergegeben.

II. Herstellung der Mehrschichtfolien

Die Mehrschichtfolie des Vergleichsbeispiels 1 (V1) besteht aus fünf Schichten. Auch die erfindungsgemäßen Mehrschichtfolien der Beispiele 1-7 (B1-B7) bestehen jeweils aus fünf Schichten. Die einzelnen Schichten der Mehrschichtfolien grenzen jeweils in der Reihenfolge unmittelbar aneinander an, in der sie nachstehend aufgeführt sind. Die Mehrschichtfolien des Vergleichsbeispiels V1 sowie der Beispiele 1-7 (B1-B7) wurden jeweils als Schlauchfolien durch Blasfolien-Co-Extrusion hergestellt.

III. Vergleichsbeispiel V1 und erfindungsgemäße Beispiele B1-B7

Vergleichsbeispiel V1:

Der Schichtaufbau entspricht demjenigen einer Schlauchinnenfolie, die von der BUERGOFOL GmbH hergestellt und für diese Anwendung bereits im Einsatz ist.

| Schicht-Nummer | Zusammensetzung | Anteil in Schicht in % | Dicke in $\mu$m |
|---|---|---|---|
| (1) | • Durethan C38 F<br>• Durethan B40 FAM | • 88<br>• 12 | 40 |
| (2) | • Haftvermittler: Admer NF 498 E | • 100 | 10 |
| (3) | • Lupolen 2420 F<br>• Exceed 1327 CA | • 70<br>• 30 | 65 |
| (4) | • Haftvermittler: Admer NF 498 E | • 100 | 10 |
| (5) | • Lupolen 2420 F<br>• Exceed 1327 CA | • 70<br>• 30 | 75 |
| | | | Gesamtdicke: 200 $\mu$m |

Beispiel B1:

Aufbau Schlauchinnenfolie mit Lucofin 1494H in Schichten (2) und (4).

| Schicht-Nummer | Zusammensetzung | Anteil in Schicht in % | Dicke in $\mu$m |
|---|---|---|---|
| (1) | • Durethan C38 F<br>• Durethan B40 FAM | • 88<br>• 12 | 40 |
| (2) | • Lucofin 1494H | • 100 | 10 |
| (3) | • Lupolen 2420 F<br>• Exceed 1327 CA | • 70<br>• 30 | 65 |
| (4) | • Lucofin 1494H | • 100 | 10 |

(fortgesetzt)

| Schicht-Nummer | Zusammensetzung | Anteil in Schicht in % | Dicke in $\mu$m |
|---|---|---|---|
| (5) | • Lupolen 2420 F<br>• Exceed 1327 CA | • 70<br>• 30 | 75 |
| | | | Gesamtdicke: 200 $\mu$m |

Beispiel B2:

Aufbau: Schlauchinnenfolie mit Lucofin 1494H in Schichten (2) und (4) sowie 100% Lucofin 1400HN Puder in Schicht (3).

| Schicht-Nummer | Zusammensetzung | Anteil in Schicht in % | Dicke in $\mu$m |
|---|---|---|---|
| (1) | • Durethan C38 F<br>• Durethan B40 FAM | • 88<br>• 12 | 40 |
| (2) | • Lucofin 1494H | • 100 | 10 |
| (3) | • Lucofin 1400HN Puder | • 100 | 65 |
| (4) | • Lucofin 1494H | • 100 | 10 |
| (5) | • Lupolen 2420 F<br>• Exceed 1327 CA | • 70<br>• 30 | 75 |
| | | | Gesamtdicke: 200 $\mu$m |

Beispiel B3:

Aufbau: Schlauchinnenfolie mit Lucofin 1494H in Schichten (2) und (4) sowie Mischung 50% Lucofin 1400HN Puder mit 50% Lupolen 2420 F in Schicht (3).

| Schicht-Nummer | Zusammensetzung | Anteil in Schicht in % | Dicke in $\mu$m |
|---|---|---|---|
| (1) | • Durethan C38 F<br>• Durethan B40 FAM | • 88<br>• 12 | 40 |
| (2) | • Lucofin 1494H | • 100 | 10 |
| (3) | • Lucofin 1400HN Puder<br>• Lupolen 2420 F | • 50<br>• 50 | 65 |
| (4) | • Lucofin 1494H | • 100 | 10 |
| (5) | • Lupolen 2420 F<br>• Exceed 1327 CA | • 70<br>• 30 | 75 |
| | | | Gesamtdicke: 200 $\mu$m |

Beispiel B4:

Aufbau: Schlauchinnenfolie mit Lucofin 1494H in Schichten (2) und (4) sowie Mischung 50% Lucofin 1400HN Puder mit 50% Lupolen 2420 F in den Schichten (3) und (5).

| Schicht-Nummer | Zusammensetzung | Anteil in Schicht in % | Dicke in $\mu$m |
|---|---|---|---|
| (1) | • Durethan C38 F<br>• Durethan B40 FAM | • 88<br>• 12 | 40 |
| (2) | • Lucofin 1494H | • 100 | 10 |

(fortgesetzt)

| Schicht-Nummer | Zusammensetzung | Anteil in Schicht in % | Dicke in $\mu$m |
|---|---|---|---|
| (3) | • Lucofin 1400HN Puder<br>• Lupolen 2420 F | • 50<br>• 50 | 65 |
| (4) | • Lucofin 1494H | • 100 | 10 |
| (5) | • Lucofin 1400HN Puder<br>• Lupolen 2420 F | • 50<br>• 50 | 75 |
| | | | Gesamtdicke: 200 $\mu$m |

Beispiel B5:

Aufbau: Schlauchinnenfolie mit üblichem Haftvermittlern in Schichten (2) und (4) sowie Mischung 50% Lucofin 1400HN Puder mit 50% Lupolen 2420 F in der Schicht (3).

| Schicht-Nummer | Zusammensetzung | Anteil in Schicht in % | Dicke in $\mu$m |
|---|---|---|---|
| (1) | • Durethan C38 F<br>• Durethan B40 FAM | • 88<br>• 12 | 40 |
| (2) | • Haftvermittler: Admer NF 498 E | • 100 | 10 |
| (3) | • Lucofin 1400HN Puder<br>• Lupolen 2420 F | • 50<br>• 50 | 65 |
| (4) | • Haftvermittler: Admer NF 498 E | • 100 | 10 |
| (5) | • Lupolen 2420 F<br>• Exceed 1327 CA | • 70<br>• 30 | 75 |
| | | | Gesamtdicke: 200 $\mu$m |

Beispiel B6:

Aufbau: Schlauchinnenfolie mit üblichem Haftvermittlern in Schichten (2) und (4) sowie Mischung 50% Lucofin 1400HN Puder mit 50% Lupolen 2420 F in den Schichten (3) und (5).

| Schicht-Nummer | Zusammensetzung | Anteil in Schicht in % | Dicke in $\mu$m |
|---|---|---|---|
| (1) | • Durethan C38 F<br>• Durethan B40 FAM | • 88<br>• 12 | 40 |
| (2) | • Haftvermittler: Admer NF 498 E | • 100 | 10 |
| (3) | • Lucofin 1400HN Puder<br>• Lupolen 2420 F | • 50<br>• 50 | 65 |
| (4) | • Haftvermittler: Admer NF 498 E | • 100 | 10 |
| (5) | • Lucofin 1400HN Puder<br>• Lupolen 2420 F | • 50<br>• 50 | 75 |
| | | | Gesamtdicke: 200 $\mu$m |

Beispiel B7:

Aufbau Schlauchinnenfolie mit üblichem Haftvermittlern in Schichten (2) und (4) sowie 100% Lucofin 1400HN Puder in der Schicht (3).

| Schicht-Nummer | Zusammensetzung | Anteil in Schicht in % | Dicke in $\mu$m |
|---|---|---|---|
| (1) | • Durethan C38 F<br>• Durethan B40 FAM | • 88<br>• 12 | 40 |
| (2) | • Haftvermittler: Admer NF 498 E | • 100 | 10 |
| (3) | • Lucofin 1400HN Puder | • 100 | 65 |
| (4) | • Haftvermittler: Admer NF 498 E | • 100 | 10 |
| (5) | • Lupolen 2420 F<br>• Exceed 1327 CA | • 70<br>• 30 | 75 |
| | | | Gesamtdicke: 200 $\mu$m |

Ergebnisse aus den Aufblastests:

| Beispiel/ Vergleichsbeispiel | Spleiß [%] | Dehnbarkeit [%] bis zum Platzen |
|---|---|---|
| B1 | 26,0 | 115,0 |
| B2 | 30,0 | 127,0 |
| B3 | 34,2 | 142,3 |
| B4 | 25,6 | 133,5 |
| B5 | 24,9 | 127,7 |
| B6 | 29,8 | 133,1 |
| B7 | 30,2 | 130,2 |
| V1 | 15,9 | 80,5 |

Beobachtungen und Auswertungen der Aufblastests:

Ausgangspunkt sind zwei Werte für die Dehnbarkeit in % bei einer handelsüblichen, bereits als Schlauchinnenfolie für Schlauchliner verwendeten Schlauchfolie (Vergleichsbeispiel V1, Hersteller BUERGOFOL GmbH), nämlich einerseits bis der erste "Spleiß", d.h. Abriss einer Folienschicht, erkennbar ist und andererseits bis die Folie platzt. Erste Abrisse einer Folienschicht im Vergleichsbeispiel 1 konnten schon bei einer Dehnung von 15,9% festgestellt werden, während die Folie bei einer Dehnung von 80,5% platzte.

Damit ist diese Schlauchinnenfolie zwar zur Verwendung als Schlauchinnenfolie für Schlauchliner prinzipiell geeignet, doch es besteht immer die Gefahr, dass ihr Dehnverhalten unter den realen Aufblasbedingungen versagt.

Im Beispiel B1 wurde ein Ethylen-Acrylat-Copolymer, hier Lucofin 1494H (ein EBA-Copolymer mit Maleinsäureanhydrid-Gruppen), zu 100% in den Schichten (2) und (4) anstelle eines üblichen Haftvermittlers wie im Vergleichsbeispiel V1 verwendet. Die Folie aus Beispiel B1 zeigt deutlich höhere Dehnbarkeiten, ehe Folienspleiß und Folienplatzen eintreten. Spleiß findet erst bei 26,0% Dehnung statt, ein Platzen tritt erst bei einer Dehnung von 115,0% auf.

Bei der Folie aus Beispiel B2, die der Folie aus Beispiel B1 mit dem Unterschied entspricht, dass auch in die mittlere Schicht (3) mit Lucofin 1400HN Puder ein Ethylen-Acrylat-Copolymer (in diesem Fall ohne weitere funktionelle Gruppe) zu 100% eingebracht wurde, finden sich gegenüber der Folie aus Beispiel B1 nochmals verbesserte Dehnbarkeiten, nämlich 30,0% Dehnung bis zum ersten Abriss einer Innenschicht (d.h. bis zum Auftreten des Folienspleißes) und 127,0% Dehnung bis zum Platzen der Folie. Im Vergleich zu der bekannten Schlauchinnenfolie aus Vergleichsbeispiel V1 ist die Dehnung bis zum Spleiß damit um 14,1% und die Dehnung bis zum Zerplatzen sogar um 46,5% erhöht.

Besonders gute Werte für die Dehnbarkeit bis zum ersten Abriss einer Schicht bzw. bis zum Zerplatzen der Folie finden sich auch bei Beispiel B3. Die Folie entspricht der Folie aus Beispiel B2 mit dem Unterschied, dass in der mittleren Schicht (3) eine Mischung von Lucofin 1400HN Puder mit einem üblichen Polyolefin, hier LDPE Lupolen 2420 F, im Verhältnis 50/50 eingesetzt wurde. Mit einer Dehnung bis zum Spleiß von 34,2% und mit einer Dehnung bis zum Platzen der Folie von 142,3% finden sich hier sogar noch höhere Dehnwerte. Damit eignet sich diese erfindungsgemäße Folie besonders gut für den Einsatz als Schlauchinnenfolie bei Einlegeschläuchen (Schlauchlinern) für die grabenlose Kanalsanierung. Die mechanischen Eigenschaften in Bezug auf die Dehnung der Folie sind hier herausragend.

Wird, wie Beispiel B4 zeigt, auch in die Schicht (5) - ausgehend von der Folie aus Beispiel B3 - eine Mischung von Lucofin 1400HN Puder mit einem üblichen Polyolefin, hier LDPE Lupolen 2420 F, im Verhältnis 50/50 eingesetzt, nehmen die Werte für die Dehnbarkeit bis zum Spleiß (25,6%) bzw. bis zum Platzen der Folie (133,5%) leicht ab, bewegen sich aber immer noch auf einem sehr hohen Niveau und führen ebenfalls zu einer Schlauchinnenfolie, die sich bestens für das Schlauchlining-Verfahren eignet.

Die Beispiele B5 bis B7 belegen, dass der positive Effekt durch Zugabe von Ethylen-Acrylat-Copolymeren auch dann eintritt, wenn diese Copolymere keine chemische Funktion besitzen. So wurde in Beispiel B5 - im Vergleich zum Vergleichsbeispiel V1 - durch Verwendung einer Mischung bestehend aus Lucofin 1400HN Puder und einem üblichen Polyolefin, hier LDPE Lupolen 2420 F, im Verhältnis 50/50 in Schicht (3), eine sehr gute Dehnung bis zum Spleiß von 24,9% und eine Dehnung bis zum Platzen der Folie von 127,7% erzielt.

Noch bessere Werte finden sich bezüglich der Dehnung bis zum Spleiß und bis zum Platzen der Folie - verglichen mit dem Beispiel 5 - bei dem Beispiel 6, wo in den Schichten (3) und (5) eine Mischung bestehend aus Lucofin 1400HN Puder mit einem üblichen Polyolefin, hier LDPE Lupolen 2420 F, jeweils im Verhältnis 50/50 verwendet wurde. Spleiß fand hier bei einer Dehnung von 29,8% statt, die Folie platzte bei einer Dehnung von 133,1%.

Beispiel B7 entspricht dem Beispiel B5 mit dem Unterschied, dass in der Schicht (3) mit 100% Lucofin 1400HN Puder eine reine Schicht eines Ethylen-Acrylat-Copolymers eingesetzt wurde. Die Dehnung bis zum Spleiß belief sich auf 30,1 %, die Dehnung beim Platzen der Folie lag bei 130,2%.

Die Beispiele B1 bis B7 zeigen die erhebliche Verbesserung der Dehnbarkeit bei den erfindungsgemäßen Folien, wenn Ethylen-Acrylat-Copolymere entweder alleine oder als Mischungen verwendet werden. Dadurch ergeben sich sehr dehn- und strapazierfähige Folien, die sich für einen sehr breiten Einsatzbereich empfehlen.

Die Erfindung ist nicht auf die hier näher aufgeführten Ausführungsbeispiele beschränkt. Auch Ausführungsformen aus Kombinationen der Merkmale der Unteransprüche sind ohne Weiteres möglich.

**Patentansprüche**

1.   Mehrschichtfolie, vorzugsweise in Form einer Schlauchfolie, mit einer Schichtfolge aus mindestens den folgenden Schichten:

- mindestens eine Schicht (1) enthaltend mindestens ein Homo- und/oder Copolyamid, vorzugsweise als eine der Außenschichten,
- mindestens eine Haftvermittlerschicht (2), (4), und
- mindestens eine weitere Schicht (3), (5), vorzugsweise als eine der Außenschichten,
**dadurch gekennzeichnet, dass** in der mindestens einen Haftvermittlerschicht (2), (4) und/oder der mindestens einen weiteren Schicht (3), (5) mindestens ein Ethylen-(Meth)Acrylat-Copolymer, in funktionalisierter oder nicht-funktionalisierter Form, enthalten ist.

2.   Mehrschichtfolie nach Anspruch 1, **dadurch gekennzeichnet, dass** der prozentuale Gewichtsanteil des mindestens einen Ethylen-(Meth)Acrylat-Copolymers in mindestens einer der Schichten (2), (3), (4), (5) im Bereich von 0,1 bis 100% liegt, vorzugsweise bei mindestens 30 Gew.-%.

3.   Mehrschichtfolie nach einem oder mehreren der vorherigen Ansprüche, **dadurch gekennzeichnet, dass** die mindestens eine weitere Schicht (3), (5) mindestens ein thermoplastisches Olefin-Homo- oder Copolymer enthält.

4.   Mehrschichtfolie nach dem vorherigen Anspruch, **dadurch gekennzeichnet, dass** der prozentuale Gewichtsanteil des mindestens einen thermoplastisches Olefin-Homo- oder Copolymers zwischen 10% und 100% liegt.

5.   Mehrschichtfolie nach Anspruch 3 oder 4, **dadurch gekennzeichnet. dass** die mindestens eine weitere Schicht (3), (5) eine Mischung von mindestens einem thermoplastischen Olefin-Homo- oder Copolymer und mindestens einem Ethylen-(Meth)Acrylat-Copolymer enthält.

6.   Mehrschichtfolie nach einem oder mehreren der vorherigen Ansprüche, **dadurch gekennzeichnet, dass** die mindestens eine Haftvermittlerschicht (2), (4) zu mehr als 50 Gew.-%, vorzugsweise zu mehr als 75 Gew.-%, besonders bevorzugt zu 100 Gew.-%, aus mindestens einem Ethylen-(Meth)Acrylat-Copolymer besteht.

7.   Mehrschichtfolie nach einem oder mehreren der vorherigen Ansprüche, **dadurch gekennzeichnet, dass** das besagte mindestens eine Ethylen-(Meth)Acrylat-Copolymer kein Ionomer ist.

8.   Mehrschichtfolie nach einem oder mehreren der vorherigen Ansprüche, **dadurch gekennzeichnet, dass** das besagte mindestens eine Ethylen-(Meth)Acrylat-Copolymer ein Ethylen-Methylacrylat (EMA-Copolymer), Ethylen-Ethylacrylat (EEA-Copolymer), Ethylen-Butylacrylat (EBA-Copolymer) oder 2-Ethyl-Hexylacrylat (2-EHA) ist.

9. Mehrschichtfolie nach einem oder mehreren der vorherigen Ansprüche, **dadurch gekennzeichnet, dass** das besagte mindestens eine Ethylen-(Meth)Acrylat-Copolymer mit mindestens einer organischen Säure oder mindestens einem organischen Säureanhydrid, vorzugsweise mit einem zyklischen organischen Säureanhydrid, besonders bevorzugt mit Maleinsäureanhydrid (MSA), funktionalisiert ist.

10. Mehrschichtfolie nach einem oder mehreren der vorherigen Ansprüche, **dadurch gekennzeichnet, dass** das besagte mindestens eine Ethylen-(Meth)Acrylat-Copolymer durch Copolymerisation mit (Meth)acrylsäure oder Glycidyl-Methacrylat oder Hydroxyethylacrylat funktionalisiert ist.

11. Mehrschichtfolie nach einem oder mehreren der vorherigen Ansprüche, **dadurch gekennzeichnet, dass** die Mehrschichtfolie, vorzugsweise in Form einer Schlauchfolie, eine Schichtfolge aus mindestens den folgenden Schichten umfasst:

    - einer Schicht (1) enthaltend mindestens ein Homo- und/oder Copolyamid, vorzugsweise als eine der Außenschichten
    - einer Haftvermittlerschicht (2),
    - eine weitere erste Schicht (3),
    - einer Haftvermittlerschicht (4),
    - eine weitere zweite Schicht (5), vorzugsweise als eine der Außenschichten,
    wobei in mindestens einer Haftvermittlerschicht (2), (4) und/oder mindestens der weiteren ersten oder zweiten Schicht (3), (5) mindestens ein Ethylen-(Meth)Acrylat-Copolymer, in funktionalisierter oder nicht-funktionalisierter Form, enthalten ist.

12. Mehrschichtfolie nach dem vorherigen Anspruch, **dadurch gekennzeichnet, dass** die erste und/oder die zweite weitere Schicht (3), (5)

    a) entweder auf einem thermoplastisches Olefin-Homo- oder Copolymer basiert, hierbei vorzugsweise kein Ethylen-(Meth)Acrylat-Copolymer enthaltend, oder
    b) auf mindestens einem Ethylen-(Meth)Acrylat-Copolymer basiert, hierbei vorzugsweise kein thermoplastisches Olefin-Homo- oder Copolymer enthaltend, oder
    c) eine Mischung aus thermoplastischem Olefin-Homo- oder Copolymer und Ethylen-(Meth)Acrylat-Copolymer enthält.

13. Mehrschichtfolie nach einem oder mehreren der vorherigen Ansprüche, **dadurch gekennzeichnet, dass** sie für UV-Strahlung zumindest teilweise durchlässig und flüssigkeitsdicht ist.

14. Verwendung einer Mehrschichtfolie nach einem der vorhergehenden Ansprüche als Schlauchinnenfolie eines Einlegeschlauchs (Schlauchliners) zur Sanierung eines Rohres, vorzugsweise einem Kanalrohr, wobei das mindestens eine Ethylen-(Meth)Acrylat-Copolymer, wenn in einer der Haftvermittlerschichten (2), (4) vorhanden, funktionalisiert ist.

15. Verwendung einer Mehrschichtfolie nach einem der vorhergehenden Ansprüche als schlauchförmiger Preliner oder Stütz- und/oder Kalibrierschlauch oder als schlauchförmige Gleitfolie beim Schlauchlining-Verfahren bei der grabenlosen Kanalsanierung.

16. Verwendung einer Mehrschichtfolie nach einem der vorhergehenden Ansprüche als Verpackungsmaterial für den sog. Non-Food-Bereich oder für Lebensmittel, insbesondere als Deckel- und/oder Bodenfolie, als Schrumpffolie oder Skinfolie, als Folie für eine sog. Bag-In-Box-Verpackung, wobei in der mindestens einen Haftvermittlerschicht (2), (4) und der mindestens einen weiteren Schicht (3), (5) mindestens ein Ethylen-(Meth)Acrylat-Copolymer, in funktionalisierter oder nicht-funktionalisierter Form, enthalten ist.

17. Verwendung einer Mehrschichtfolie nach einem der vorhergehenden Ansprüche als Schutzfolie, z.B. Oberflächenschutzfolie oder für Schutzanzüge, als Abdeckfolie oder als Agrarfolie.

18. Einlegeschlauch (Schlauchliner) für die grabenlose Kanalsanierung, umfassend eine außenliegende Schlauchfolie, die vorzugsweise flüssigkeitsdicht ist sowie UV-Strahlung und/oder kurzwelliges sichtbares Licht reflektiert und/oder absorbiert sowie blickdicht oder zumindest kontakttransparent ist, sowie eine innenliegende Mehrschichtfolie gemäß einem der Ansprüche 1 bis 13, sowie einem zwischen diesen beiden Folien angeordnetem Trägermaterial, das mit einem reaktiven Kunststoffharz getränkt ist.

EP 2 740 587 A1

Europäisches
Patentamt

European
Patent Office

Office européen
des brevets

**EUROPÄISCHER RECHERCHENBERICHT**

Nummer der Anmeldung

EP 13 19 6408

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2007/172614 A1 (LEE I-HWA [US]) 26. Juli 2007 (2007-07-26) * Absätze [0002], [0038], [0042], [0044], [0045], [0048], [0049], [0091] - [0116], [0123] - [0125], [0129], [0144], [0154], [0155]; Ansprüche 1,2,4-7,9-13,15,20,21,24-27; Beispiele; Tabelle 1 * * Absatz [0078] * | 1-13,16 | INV. B32B1/08 B32B7/12 B32B27/08 B32B27/30 B32B27/32 B32B27/34 F16L55/165 |
| X | US 3 697 368 A (BHUTA MAHENDRA ET AL) 10. Oktober 1972 (1972-10-10) * Spalte 1, Zeile 24 - Spalte 2, Zeile 16; Ansprüche 1,3,4,7,9,11 * * Spalte 3, Zeile 61 - Spalte 4, Zeile 70; Abbildungen 3,5; Beispiel I * | 1-8, 10-12, 16,17 | |
| X | EP 2 508 338 A1 (WIPAK WALSRODE GMBH & CO KG [DE]) 10. Oktober 2012 (2012-10-10) * Absätze [0030], [0033], [0034], [0036], [0056], [0070], [0076]; Ansprüche 1,2,4-6,13-15 * | 1-5,7,8, 10-13,16 | |
| | | | RECHERCHIERTE SACHGEBIETE (IPC) B32B F16L |
| X | EP 2 514 301 A1 (KRITIS PLASTIKA [GR]) 24. Oktober 2012 (2012-10-24) * Absätze [0077], [0079]; Ansprüche 1,11 * | 1-4,6-8, 12,13,17 | |
| X | EP 1 842 664 A1 (KUREHA CORP [JP]) 10. Oktober 2007 (2007-10-10) * Absätze [0001] - [0007], [0054], [0055], [0078]; Ansprüche 4-6,; Beispiele 3,4,6-8; Tabellen 1,2 * | 1-4,6-9, 11,13,16 | |

-/--

Der vorliegende Recherchenbericht wurde für alle Patentansprüche erstellt

| Recherchenort | Abschlußdatum der Recherche | Prüfer |
|---|---|---|
| München | 9. April 2014 | Kanetakis, Ioannis |

Europäisches
Patentamt

European
Patent Office

Office européen
des brevets

# EUROPÄISCHER RECHERCHENBERICHT

Nummer der Anmeldung

EP 13 19 6408

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,P | WO 2012/175373 A1 (HUHTAMAKI FORCHHEIM [DE]; MCKENNA PAUL [US]; MAUSER MATTHIAS [DE]) 27. Dezember 2012 (2012-12-27) * Seite 16, Zeile 1 - Seite 18, Zeile 20; Ansprüche; Abbildung 1 * * Seite 1, Zeile 6 - Zeile 15 * * Seite 3, Zeile 10 - Zeile 20 * * Seite 5, Zeile 6 - Zeile 7 * ----- | 1-5,7,8, 12,13,17 | |
| X | US 4 954 393 A (JONES MARK A [GB]) 4. September 1990 (1990-09-04) * Spalte 2, Zeile 12 - Zeile 33; Ansprüche 1-5,7-10 * * Spalte 1, Zeile 6 - Zeile 20; Beispiele * ----- | 1-4,6-9, 11-15,18 | |
| X | US 2004/035485 A1 (GLEIM ROBERT ALAN [US] ET AL) 26. Februar 2004 (2004-02-26) * Absätze [0006] - [0014], [0037] - [0041]; Ansprüche 1-5,7,12-16,18,24-45; Abbildungen * ----- | 1,2,6,7, 10,13-15 | |
| X,D | DE 10 2010 023764 A1 (HUHTAMAKI FORCHHEIM [DE]) 15. Dezember 2011 (2011-12-15) * Absätze [0008], [0078], [0084]; Ansprüche 1,3,7,8,10,11; Abbildung 1; Beispiel B4; Tabellen 2,3 * ----- | 1-4,6,8, 11-13, 15,18 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 9. April 2014 | Kanetakis, Ioannis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 19 6408

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2014

| Im Recherchenbericht angeführtes Patentdokument | Datum der Veröffentlichung | Mitglied(er) der Patentfamilie | Datum der Veröffentlichung |
|---|---|---|---|
| US 2007172614 A1 | 26-07-2007 | AR 059404 A1<br>AU 2006332778 A1<br>BR PI0621172 A2<br>EP 1976687 A1<br>JP 2009522137 A<br>US 2007172614 A1<br>WO 2007079100 A1 | 09-04-2008<br>12-07-2007<br>06-12-2011<br>08-10-2008<br>11-06-2009<br>26-07-2007<br>12-07-2007 |
| US 3697368 A | 10-10-1972 | CA 996330 A1<br>DE 2208619 A1<br>FI 57549 B<br>GB 1366400 A<br>NL 7202396 A<br>US 3697368 A | 07-09-1976<br>31-08-1972<br>30-05-1980<br>11-09-1974<br>29-08-1972<br>10-10-1972 |
| EP 2508338 A1 | 10-10-2012 | DE 102011015958 A1<br>EP 2508338 A1 | 04-10-2012<br>10-10-2012 |
| EP 2514301 A1 | 24-10-2012 | CA 2766750 A1<br>CN 103501589 A<br>EA 201391557 A1<br>EP 2514301 A1<br>KR 20140023317 A<br>US 2013097922 A1<br>WO 2012143289 A1 | 20-10-2012<br>08-01-2014<br>31-03-2014<br>24-10-2012<br>26-02-2014<br>25-04-2013<br>26-10-2012 |
| EP 1842664 A1 | 10-10-2007 | AU 2007201447 A1<br>EP 1842664 A1<br>JP 5274645 B2<br>JP 2012101552 A<br>US 2007237915 A1 | 25-10-2007<br>10-10-2007<br>28-08-2013<br>31-05-2012<br>11-10-2007 |
| WO 2012175373 A1 | 27-12-2012 | CA 2837032 A1<br>DE 102011105558 A1<br>US 2013004714 A1<br>WO 2012175373 A1 | 27-12-2012<br>27-12-2012<br>03-01-2013<br>27-12-2012 |
| US 4954393 A | 04-09-1990 | DK 235989 A<br>EP 0342897 A2<br>GB 2218668 A<br>JP H01320160 A<br>US 4954393 A | 18-11-1989<br>23-11-1989<br>22-11-1989<br>26-12-1989<br>04-09-1990 |
| US 2004035485 A1 | 26-02-2004 | KEINE | |
| DE 102010023764 A1 | 15-12-2011 | AU 2011267439 A1 | 20-12-2012 |

Für nähere Einzelheiten zu diesem Anhang : siehe Amtsblatt des Europäischen Patentamts, Nr.12/82

**ANHANG ZUM EUROPÄISCHEN RECHERCHENBERICHT**
**ÜBER DIE EUROPÄISCHE PATENTANMELDUNG NR.**
EP 13 19 6408

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-04-2014

| Im Recherchenbericht angeführtes Patentdokument | Datum der Veröffentlichung | Mitglied(er) der Patentfamilie | Datum der Veröffentlichung |
|---|---|---|---|
| | | CA          2799825  A1 | 22-12-2011 |
| | | CN          103079822 A | 01-05-2013 |
| | | DE  102010023764  A1 | 15-12-2011 |
| | | EP          2582520  A1 | 24-04-2013 |
| | | JP          2013534874 A | 09-09-2013 |
| | | SG          186191  A1 | 30-01-2013 |
| | | US          2013126029 A1 | 23-05-2013 |
| | | WO          2011157356 A1 | 22-12-2011 |

EPO FORM P0461

Für nähere Einzelheiten zu diesem Anhang : siehe Amtsblatt des Europäischen Patentamts, Nr.12/82

**EP 2 740 587 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007054350 A1
- EP 1155256 B1
- WO 2010075946 A1
- DE 102010023764 A1